# EUROPEAN PATENT APPLICATION

(11) **EP 3 225 836 A1**
(43) Date of publication of application: **04.10.2017**
(21) Application number: 17162518.9
(22) Date of filing: 23.03.2017
(51) Int. Cl.: F03D 1/06, F03D 80/60

(54) **WIND POWER GENERATION DEVICE**

(30) Priority: 29.03.2016 JP 2016064828
(71) Applicant: Hitachi, Ltd., Tokyo 100-8280 (JP)
(72) Inventor: FUNABASHI, Shigehisa, Tokyo 100-8280 (JP); INAMURAI, Shingo, Tokyo 100-8280 (JP)
(74) Representative: MERH-IP Matias Erny Reichl Hoffmann Patentanwälte PartG mbB

(57) **Abstract**

To provide a wind power generation device in which cooling performance of a control device installed within a hub is improved.

Disclosed is a wind power generation device including a rotor that includes a hub 20 housing a control device and blades 1 supported by the hub 20; a nacelle 6 that rotatably supports the rotor; and a rotation main shaft 3 that is disposed across an inside of the hub and an inside of the nacelle 6. A flow path for communicating the inside of the hub 20 and the inside of the nacelle is formed, the flow path is disposed on a radially outer side of the rotation main shaft 3 and is fixed to the nacelle 6. A first flow-out hole is provided in the flow path on the inside of the hub 20.

## Description

### BACKGROUND OF THE INVENTION

### FIELD OF THE INVENTION

The present invention relates to a wind power generation device having a compact ventilation cooling mechanism which realizes a stable operation of a control device disposed in a hub by cooling the control device without risk of corrosion due to introduction of outside air having high humidity.

### BACKGROUND ART

Usually, the wind power generation device is configured to include a nacelle in which a rotor that is installed in a hub and is rotated by blades is supported via a main shaft in an upper portion of a tower. A power generator that is rotated by the rotation of the main shaft of the blades is often included on an inside of the nacelle. In order to obtain a preferable rotational speed of the power generator, the rotational speed may be increased by disposing a speed increasing machine between the rotor and the power generator. Electric energy generated by the power generator is converted into electric power that can be supplied to an electric power system via a power converter or a transformer.

Devices such as the speed increasing machine and the power generator within the nacelle generate heat due to a loss associated with operations thereof. Heat is often released to the outside via a dedicated water cooling system with respect to the speed increasing machine and the power generator. In addition, since a temperature of air inside the nacelle may be increased due to heat released toward the nacelle from surfaces of the speed increasing machine and the power generator, and due to being warmed from the outside by solar radiation, ventilation cooling may be performed by introducing outside air. In this case, particularly, in a case of a wind power generation device that is installed on the ocean, the outside air contains a large amount of moisture and salt and if the outside air is introduced within the nacelle as it is, since corrosion of the devices within the nacelle may occur, for example, humidity management is performed by introducing air via a salt removal filter or installing a dehumidifier within the nacelle.

Devices such as a pitch actuator for adjusting a pitch angle (mounting angle) of the blade, a control device thereof, and a battery connected to the actuator are provided within the hub. The pitch angle of the blade according to conditions of the wind speed and the like is controlled, and wind energy is efficiently captured by driving the pitch actuator. The devices provided within the hub generate heat as the loss during the operation thereof, the generated heat may stay within the hub, and a temperature within the hub may be increased. In order to maintain a normal operation of the device and prevent the life of the device from being shortened, it is necessary to avoid an excessive increase in the temperature within the hub.

In order to avoid high temperature within the hub, for example, in JP-A-2009-091929, a wind power generation device, in which a drive and power generation mechanism connected to a rotor head on which windmill blades are mounted is housed within a nacelle, a control device and the like are housed within a hub of the rotor head, an air flow forming unit that circulates air between an inside of rotor head and an inside of the nacelle is provided via a communication path formed between rotor head and the nacelle, and the air flow forming unit is an air circulation guide that is installed in the communication path has been proposed.

The hub that supports long and large blades and rotates is required to be strengthened and lighter. In addition, a plurality of the control devices of the pitch actuator of the blades and the like are required to be installed according to the number of the blades and, as a result, a space within the hub is limited. In addition, as a size of the wind power generation device has increased in recent years, a capacity of the control device is also increased and an amount of heat generated from the devices has also increased. Therefore, when cooling the inside of the hub, it is important to reduce the size of the cooling mechanism and further improve the efficiency.

### SUMMARY OF THE INVENTION

In view of the above points, an object of the invention is to provide a wind power generation device in which cooling performance of a control device installed within a hub is improved.

In order to solve the problem described above, for example, configurations described in the claims are employed. In order to solve the problem described above, according to an aspect of the present invention, there is provided a wind power generation device including a rotor that includes a hub housing a control device and blades supported by the hub; a nacelle that rotatably supports the rotor; and/or a rotation main shaft that is disposed across an inside of the hub and an inside of the nacelle. A flow path for communicating the inside of the hub and the inside of the nacelle is formed, the flow path is disposed on a radially outer side of the rotation main shaft and is fixed to the nacelle. A first flow-out hole is provided in the flow path on the inside of the hub.

According to the invention, it is possible to provide the wind power generation device in which cooling performance of a control device installed within a hub is improved.

### BRIEF DESCRIPTION OF THE DRAWINGS

Fig. 1 is a schematic view illustrating a wind power generation device according to a first example.
Fig. 2 is a schematic side view of a nacelle and a hub portion of the wind power generation device of the first example.
Fig. 3 is a schematic perspective view of a straight pipe portion of a fixed main shaft and a rotation main shaft of a wind power generation device of a second example.
Fig. 4 is a schematic side view of a nacelle and a hub portion of a wind power generation device of a third example.
Fig. 5 is a schematic side view of a nacelle, a hub, and a blade portion of a wind power generation device of a fourth example.
Fig. 6 is a schematic sectional view of a straight pipe portion of a fixed main shaft and a rotation main shaft of a wind power generation device of a fifth example.
Fig. 7 is a schematic sectional view of a straight pipe portion of a fixed main shaft and a rotation main shaft of a wind power generation device of a sixth example.

### DETAILED DESCRIPTION OF THE INVENTION

Hereinafter, examples of the invention will be described with reference to the drawings.

### First Example

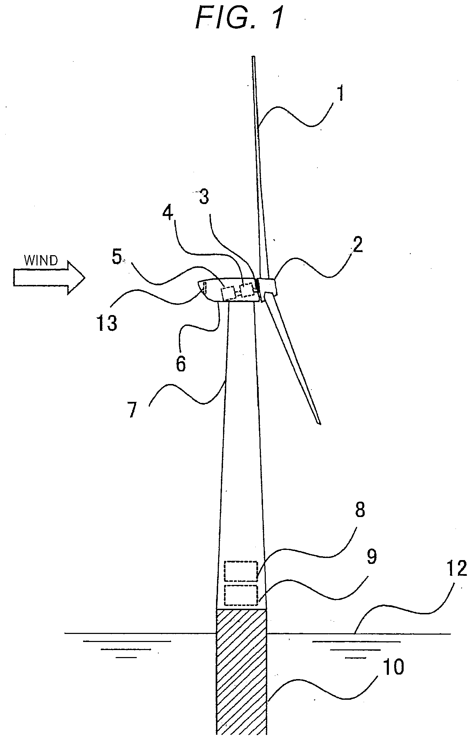

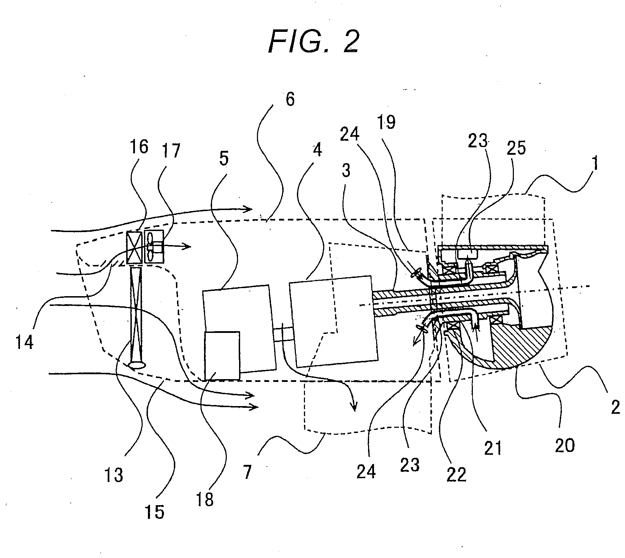

A first example will be described with reference to Figs. 1 and 2. Fig. 1 illustrates a schematic view of a wind power generation device in the first example. The wind power generation device is installed at sea, a nacelle 6 is disposed at a top of a tower 7 installed so as to protrude above ocean from below a water surface, and the nacelle 6 pivotally supports a rotation main shaft 3 connected to blades 1 and a hub (not illustrated in Fig. 1). The rotation main shaft 3 is connected to a power generator 5 via a speed increasing machine 4. The power generator 5 is connected to electric appliances such as a power converter 8 and a transformer 9 that are built in a lower portion of the tower 7 by a power cable (not illustrated).

In the wind power generation device, the nacelle 6 is rotated (yaw control) so that a rotation surface of the blade 1 faces a wind direction, the blade 1 receives a force due to wind energy, and the rotation main shaft 3 is rotated. The rotation of the rotation main shaft 3 is increased to a suitable rotational speed for the power generator 5 via the speed increasing machine 4 and is transmitted to the power generator 5. Electric energy generated by rotation of the power generator 5 is rectified by the power converter 8, a voltage is adjusted by the transformer 9 and is sent to an electric power system. In this case, heat is generated in the power generator 5, the power converter 8, the transformer 9, and the like due to a loss when a current flows. In addition, even in the speed increasing machine 4, a loss occurs as heat.

In the wind power generation device of the example, a water cooling system is employed for cooling the power generator 5 and the speed increasing machine 4. That is, cooling water is circulated between the power generator 5, the speed increasing machine 4, and a radiator 13 by a pump (not illustrated), heat retrieved from the power generator 5 and the speed increasing machine 4 is radiated to the outside by the radiator 13 installed in an upstream portion of the nacelle 6 thereby performing cooling.

Fig. 2 illustrates a schematic side view of the nacelle 6 and a hub 20 portion of the wind power generation device of the first example. The wind blows from a left side to a right side, the nacelle 6 receives the wind from a side opposite to a side on which the blades 1 are installed. That is, the wind power generation device is a downwind type in which the blades 1 are positioned on a downstream side of the tower 7. The radiator 13 is installed on an upwind side of the nacelle 6 so that a suction surface thereof faces an upwind direction. The cooling water of which a temperature is increased by cooling heat generated by the power generator 5 or the speed increasing machine 4 flows into the radiator 13 and the radiator 13 is configured to radiate the heat to the outside air. An air inlet 14 that is opened so as to directly receive natural wind is provided on the upwind side of the radiator 13. A flow path is formed on the downwind side of the radiator 13 to guide a flow of air passing through the radiator to a below of the nacelle 6. An air outlet 15 that is an outlet of the flow path through which the air flows out to the outside is provided in a lower portion of the nacelle 6. The radiator 13 is installed so as to face the flowing-in wind and the wind passing between fans of the radiator 13 is led to the air outlet 15.

The air inlet 14 that introduces the outside air into the nacelle 6, a filter 16 that removes salt from the outside air, and a fan 17 that promotes the introduction of the outside air are provided on the upwind side of the nacelle 6. The outside air of a low temperature is introduced into the nacelle 6, ventilation is performed, and thereby the inside of the nacelle 6 is suppressed to be a high temperature by opening the air inlet 14 and rotating the fan 17. Salt is removed by the filter 16 and humidity is controlled by a dehumidifier 18 within the nacelle 6 so that salt or moisture contained in the introduced outside air does not cause corrosion of devices on the inside of the nacelle 6.

As described above, the hub 20 is connected to the rotation main shaft 3 and the wind energy caught by the blades 1 is transmitted to the speed increasing machine 4 via the rotation main shaft 3. In the wind power generation device, a fixed main shaft 21 is provided around the rotation main shaft 3 so as to enclose the rotation main shaft 3 and the fixed main shaft 21 is stopped and fixed to the nacelle 6 via a frame 19. Furthermore, the fixed main shaft 21 is installed so as to pierce the inside of the hub 20. Thus, the hub 20 is supported by the fixed main shaft 21 in a rotatable state by a bearing 22 that is installed between the fixed main shaft 21 and the hub 20. By the configuration described above, a load that operates to bend the rotation main shaft 3 is generated by a weight or a wind speed distribution of the blades 1 or the hub 20, the fixed main shaft 21 is responsible for the load, and the rotation main shaft 3 is responsible for rotational torque contributing to the power generation. Therefore, it is possible to distribute and support the load, and high reliability of the main shaft portion of the wind power generation device is achieved. On the other hand, in terms of a space inside the hub, it is narrower than a case where the fixed main shaft 21 is not provided.

A pitch actuator 25 for controlling a pitch angle of the blade 1, a control device (not illustrated) therefor, a battery (not illustrated), and the like are built in the hub 20. According to environmental conditions such as the wind speed, the pitch angle of the blade 1 is controlled and pitch control such as efficient recovery of the wind energy or reduction of a wind load of the blade 1 during a high wind speed as feather (state of the pitch angle to let wind escape) is performed.

In the wind power generation device of the example, a plurality of ducts 23 are fixedly disposed on the fixed main shaft 21 across the nacelle 6 and the hub 20 in a gap between the rotation main shaft 3 and the fixed main shaft 21. Fans 24 for pushing or sucking air are disposed in end portions of the ducts 23 on the nacelle side. Openings of end portions of the ducts 23 on the hub side are faced the radially outer side of the fixed main shaft 21 through openings provided in the middle of the fixed main shaft 21. The inside air of the nacelle 6 that has flown into the duct 23 by the pushing fan 24 is ejected on the radially outer side of the fixed main shaft 21 on the inside of the hub 20. When the wind power generation device generates power, since the hub 20 is rotated, air is ejected from the duct 23 fixed to the fixed main shaft 21 and consequently the nacelle 6 side toward the inside of hub 20 that is rotated relative to the nacelle 6. Therefore, the pitch actuator 25, the control device thereof, the battery, and the like provided the inside of the hub 20 are rotated and moved into the flow of the air ejected from the duct 23. Therefore, even in case of the ducts 23 having limited exhaust locations, the air introduced from the nacelle 6 can directly abut against the pitch actuator 25, the control device thereof, and the battery to be cooled. In addition, for example, even in a case.of a device against which the air does not directly abut, since the hub 20 is rotated and thereby circulation of the air inside thereof is promoted, the temperature in the entire inside of the hub 20 can be easily kept uniform and improvement of cooling effect can be expected. Of course, as described above, since salt and moisture of the air on the inside of the nacelle 6 are suppressed by the effect of the filter 16 or the dehumidifier 18, even if salt and moisture are introduced on the inside of the hub 20, a risk of corrosion of the devices installed therein is not increased. The air after cooling the devices on the inside of the hub 20 is sucked from the other duct 23 connected to the sucking fan 24 and returns to the inside of the nacelle 6. In the example, the ducts 23 are fixed to the nacelle and, for example, a blowing effect or the like that is generated by a relative movement (rotation) between the rotor and the nacelle is not used. Therefore, it is possible to reduce a flow path area communicating between the hub and the nacelle and it is easy to prevent the entry of the outside air of high humidity.

The ventilation cooling on inside of the hub 20 configured as described above not only realizes reliable and stable operation of the devices on the inside of the hub 20 but also utilizes the gap configured between the fixed main shaft 21 and the rotation main shaft 3 protruding on the inside of the hub 20 as a ventilation flow path. Therefore, there is no need to newly narrow the space on the inside of the hub 20. The reason why the pushing or sucking fan 24 is provided on the nacelle 6 side is that it takes consideration of the narrow space on the inside of the hub 20. This is because there is a relative space as compared to the hub 20 and it is advantageous to provide the fans 24 on the nacelle 6 side which does not rotate unlike the hub 20 from the viewpoint of easiness of maintenance of the fans 24.

Furthermore, the air of a low temperature which is not subjected to a temperature rise due to heat generating bodies (power generator 5, the speed increasing machine 4, and the like) on the inside of the nacelle can be directly sent to the hub side by extending the duct, which sends air to the hub side among the ducts 23 in Fig. 2, to the vicinity of the fan 17 for the nacelle ventilation. In this case, there is no need to newly provide the fans 24 for ventilating the inside of the hub in the ducts.

### Second Example

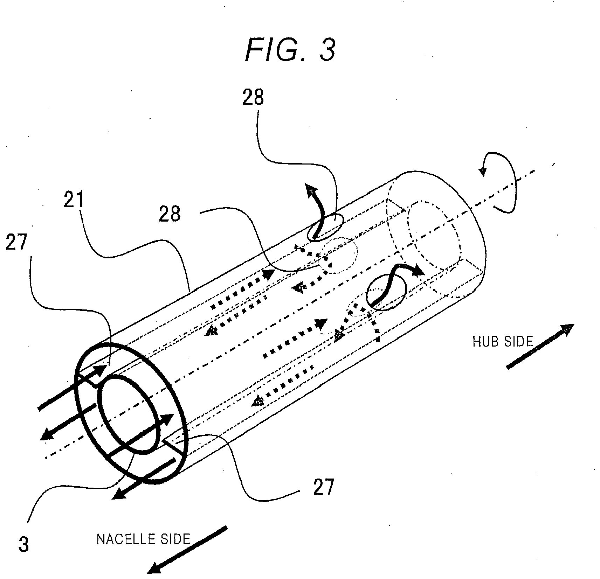

Next, a second example of the invention will be described with reference to Fig. 3. Moreover, the configuration itself of the entire wind power generation device is the same as that of the first example and duplicate description will be omitted.

Fig. 3 is a schematic perspective view of the straight pipe portion of a rotation main shaft 3 and the fixed main shaft 21 in the second example of the invention. A difference from the first example is that the flow path is divided by a plurality of vanes 27 extending in a direction along a rotation axis from an inner wall surface of the fixed main shaft 21 toward the rotation main shaft 3. A part (upper half in Fig. 3) of the divided flow path is used as the flow path for sending air from the nacelle 6 to the hub 20 and a remaining flow path (lower half in Fig. 3) is used as a flow path for returning air from the hub 20 to the nacelle 6. Therefore, the duct 23 that is required in the first example is not necessary. Since there is a need to have a gap between the rotation main shaft 3 and the fixed main shaft 21 to permit a rotational movement of the rotation main shaft, it is inevitable to mix the air sent to the hub 20 and the air returned from the hub 20 in the gap and the efficiency of ventilation cooling of the hub 20 is lowered. However, since the duct 23 is not necessary to be provided in the vicinity of the rotation main shaft 3, it is possible to avoid a risk that the duct 23 is unfastened and comes into contact with the rotation main shaft 3.

### Third Example

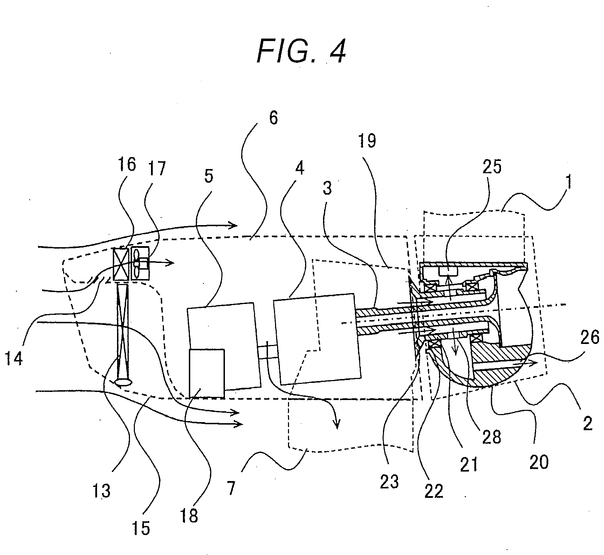

Next, a third example of the invention will be described with reference to Fig. 4. Moreover, the configuration itself of the entire wind power generation device is the same as that of the second example and duplicate description will be omitted.

Fig. 4 is a schematic side view of a nacelle 6 and a hub 20 portion in the third example of the invention. A difference from the first example is that a duct or a flow path for returning air from the hub 20 side to the nacelle 6 side is not provided, and the air flows from the nacelle 6 side to an inside of the hub 20 is discharged to the outside as it is via a flow path 26 provided in the hub. The flow path 26 is disposed from the inside of the nacelle toward a downwind side. In a case of a downwind type wind power generation system in which blades 1 or the hub 20 is positioned on a downstream side of the nacelle 6, the vicinity of an inlet of the outside air positioned on an upstream side of the nacelle 6 is likely to be a high pressure, and a surrounding of the hub 20 positioned on the downstream side of the nacelle 6 is likely to be a negative pressure. Since the inside of the nacelle 6 is in a posture pressure by driving of a fan 17 for introducing the outside air to the nacelle 6, air introduction from the upstream side of the nacelle 6 is smoothly performed, it is easy to construct a pressure gradient within the nacelle 6, within the hub 20, and on the downstream side of the hub 20, and a natural flow of variation air can be configured. In addition, since a flow path returning the air from the hub 20 to the nacelle 6 is not necessary, a flow path through which air flows from the nacelle 6 to the hub 20 can be taken larger and a pressure loss can be also reduced. In the example, it is possible to expect cost reduction by utilizing the effect and eliminating the fan 24 connected to the duct 23 in the first and second examples or to the flow path. In addition, for example, even if the fan 24 is provided, it is possible to suppress a capacity thereof and contribute to cost reduction. Particularly, in the example, since the flow path 26 toward the downwind side is provided, wind entering through an air inlet 14 on the upwind side easily flows toward the downwind side via the flow path 26.

### Fourth Example

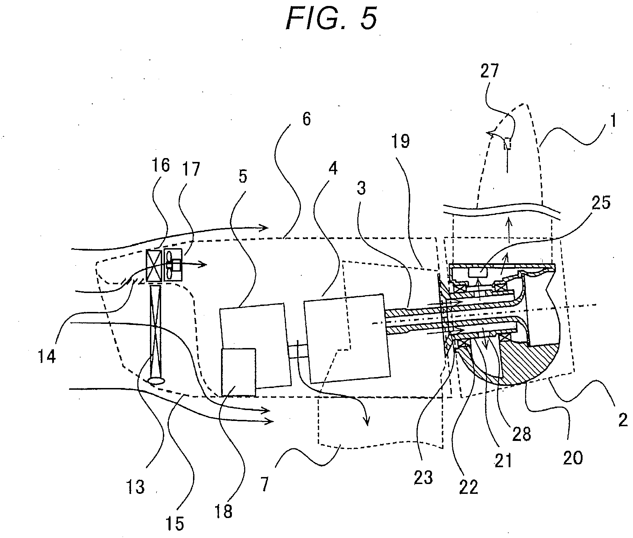

Next, a fourth example of the invention will be described with reference to. Fig. 5. Moreover, the configuration itself of the entire wind power generation device is the same as that of the third example and duplicate description will be omitted.

Fig. 5 is a schematic side view of a rotor portion including a nacelle 6 and a hub 20, and a blade 1 in the fourth example of the invention. A difference from the third example is that an inside of the hub 20 communicates with an inside of the blade 1 and ventilated air on the inside of the hub 20 flows out from an air outlet 27 provided in the blade to the outside through the inside of the blade 1. With such a configuration, it is possible to induce verification of the air on the inside of the blade 1, and eventually the air on the inside of the hub 20 by using a centrifugal force acting on the blade 1. In order to utilize the effect of the centrifugal force acting on the blade 1, it is preferable that the air outlet 27 has a large turning radius and located in the vicinity of a blade tip, but if the air outlet 27 is located at least at a portion of the blade tip more than a half of a length of the blade, it is thought that an advantageous effect can be expected in attraction of verification air. Therefore, a natural flow of variation air can be configured on the inside of the hub 20, the inside of the blade 1, and the outside. Similar to the third example, since a flow path returning air from the hub 20 to the nacelle 6 is not necessary, the flow path through which the air flows from the nacelle 6 to the hub 20 can be taken larger and a pressure loss can be also reduced. In the example, it is possible to expect cost reduction by utilizing the effect and eliminating the fan 24 connected to the duct 23 in the first and second examples or to the flow path. For example, even if the fan 24 is provided, it is possible to reduce the capacity thereof and to contribute to cost reduction.

In addition, although the opening 27 is provided in the vicinity of the blade tip of the blade 1, since a distance thereof to the hub 20 is long, even in a state where the wind power generation device is stopped, it is possible to expect to avoid a phenomenon that corrosion of devices installed on the inside of the hub 20 progresses due to leakage of the outside air containing a large amount of moisture and salt.

### Fifth Example

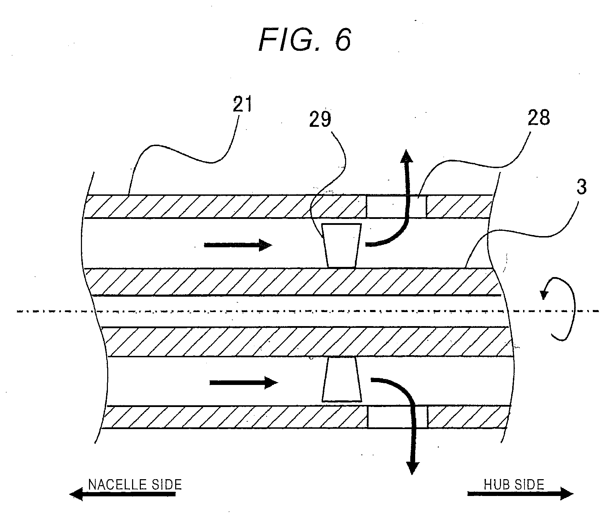

Next, a fifth example of the invention will be described with reference to Fig. 6. Moreover, the configuration itself of the entire wind power generation device is the same as that of the third example and duplicate description will be omitted.

Fig. 6 is a schematic sectional view illustrating a straight pipe portion of a rotation main shaft 3 and a fixed main shaft 21 in the fifth example of the invention. A difference from the third example is that a fin 29 is installed in the rotation main shaft 3. As the rotation main shaft 3 is rotated, the fin 29 is also rotated, thereby blowing air on the inside of the nacelle to the inside of the hub. An air outlet 28 provided in a fixed main shaft 21 is on a downstream side (hub side) from the fin 29 and air from the nacelle flows into the hub therefrom. In this configuration, an air flow can be formed by utilizing the rotation of the rotation main shaft 3 which is originally present without newly providing a verification fan for verification on the inside of the hub. For example, even in a case where a verification fan is provided, it is possible to reduce the capacity thereof and to contribute cost reduction.

Moreover, the configuration illustrated in the example, specifically, the configuration in which the rotation main shaft 3 having the fin 29 is used can be also applied to the other examples described above.

### Sixth Example

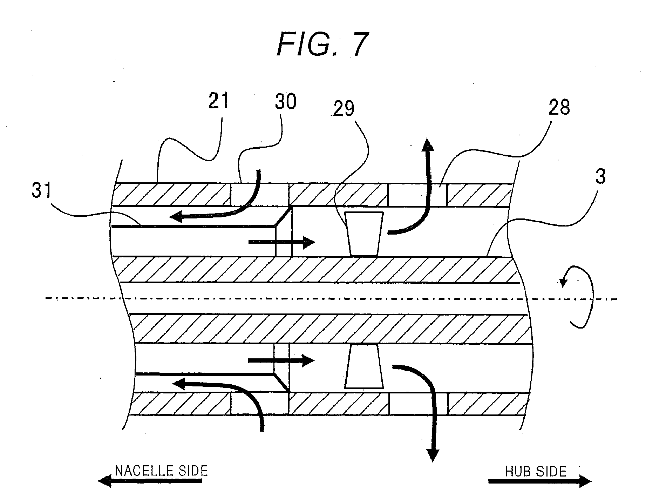

Next, a sixth example of the invention will be described with reference to Fig. 7. Moreover, the configuration itself of the entire wind power generation device is the same as that of the second example and duplicate description will be omitted.

Fig. 7 is a schematic sectional view illustrating a straight pipe portion of a rotation main shaft 3 and a fixed main shaft 21 in the sixth example of the invention. A difference from the second example is that, as illustrated in the fifth example, a fin 29 is installed in the rotation main shaft 3 and a substantially cylindrical guide 31 that divides a gap configured between a fixed main shaft 21 and the rotation main shaft 3 further in a radial direction is provided. The guide 31 is provided on the nacelle side from the fin 29. An air flow formed by the rotation of the fin 29 enters from the nacelle and, first, flows on an inner diameter side in a flow path partitioned by the guide 31 along an outer wall surface of the rotation main shaft 3 and then flows into the hub via the fin 29 and a flow-out 28. Air cooling the devices on the inside of the hub enters the fixed main shaft 21 from a flow-in hole 30 installed in the fixed main shaft 21, flows through a flow path on an outer diameter side partitioned by the guide 31 along the inner wall surface of the fixed main shaft 21, and returns to the inside of the nacelle.

According to this configuration, also for the wind power generation device having a configuration in which the air cooling the inside of the hub as illustrated in the first example and the second example returns on the inside of the nacelle, similar to the fifth example, it is possible to form the air flow without newly providing a verification fan for verification on the inside of the hub. For example, even in a case where the verification fan is provided, it is possible to obtain effects that reduce the capacity thereof and contribute to cost reduction.

Although examples of the invention are described, the examples described above merely examples and do not limit the contents of the invention. For example, the invention can be applied to a wind power generation device installed on land. In addition, except for the configuration illustrated in the third example, the effects of the invention can be also expected in an upwind type wind power generation device in which the blade 1 or the hub 20 is disposed on the upstream side of the nacelle 6.

Features, components and specific details of the structures of the above-described embodiments may be exchanged or combined to form further embodiments optimized for the respective application. As far as those modifications are readily apparent for an expert skilled in the art they shall be disclosed implicitly by the above description without specifying explicitly every possible combination, for the sake of conciseness of the present description.

## Claims

1. A wind power generation device comprising:
a rotor that includes a hub (20) housing a control device and blades (1) supported by the hub (20);
a nacelle (6) that rotatably supports the rotor; and
a rotation main shaft (3) that is disposed across an inside of the hub (20) and an inside of the nacelle (6),
wherein a flow path for communicating the inside of the hub (20) and the inside of the nacelle (6) is formed, the flow path is disposed on a radially outer side of the rotation main shaft (3) and is fixed to the nacelle (6), and
wherein a first flow-out hole is provided in the flow path on the inside of the hub (20).

2. The wind power generation device according to claim 1, further comprising:
a fixed main shaft (21) that is disposed on a radially outer side from the flow path,
wherein the first flow-out hole causes a radially inner side to communicate with a radially outer side of the fixed main shaft (21).

3. The wind power generation device according to claim 2,
wherein a plurality of vanes (27) extending in an axial direction of the rotation main shaft (3) between an inner wall of the fixed main shaft (21) and an outer wall of the rotation main shaft (3) are provided in a circumferential direction of the rotation main shaft (3).

4. The wind power generation device according to any one of claims 1 to 3,
wherein the flow path is formed of ducts (23) disposed across the inside of the hub (20) and the inside of the nacelle (6).

5. The wind power generation device according to any one of claims 1 to 4,
wherein the first flow-out hole is disposed toward the radially outer side with respect to the rotation shaft (3) of the rotor.

6. The wind power generation device according to any one of claims 1 to 5,
wherein at least one of a fan (24) that pushes air on the inside of the nacelle (6) to the flow path and a fan (17) that sucks air on the inside of the hub (20) from the flow path is provided on the inside of the nacelle (6).

7. The wind power generation device according to any one of claims 1 to 6,
wherein the nacelle (6) includes a fan that takes air on an outside of the nacelle (6).

8. The wind power generation device according to any one of claims 1 to 7,
wherein the rotor is a downwind rotor that is positioned on a downwind side from the nacelle (6) and generates power, and the rotor has an air inlet opening on an upwind side of the nacelle (6).

9. The wind power generation device according to any one of claims 1 to 8,
wherein the rotor is a downwind rotor that is positioned on a downwind side from the nacelle (6) and generates power, and the rotor has an air outlet (15) causing the inside of the hub (20) to communicate with the outside.

10. The wind power generation device according to claim 9,
wherein the air outlet (15) is disposed toward the downwind side.

11. The wind power generation device according to any one of claims 1 to 9,
wherein an inside of the blade (1) communicates with the inside of the hub (20), and
wherein the air outlet (15) causing the inside of the blade (1) to communicate with the outside is included in the vicinity of a blade end portion.

12. The wind power generation device according to any one of claims 1 to 11, further comprising:
a fin that is provided in the rotation main shaft (3),
wherein the first flow-out hole is provided closer to the rotor side than the fin.

13. The wind power generation device according to claim 12, further comprising:
a guide (31) that is disposed on the nacelle side from the fin and separates a flow of wind toward the fin and a flow of wind away from the fin, and
a second flow-out hole that causes a flow path communicating with the wind away from the fin in the guide to communicate with the radially outer side of the fixed main shaft (21).
